# EUROPEAN PATENT APPLICATION

(11) **EP 4 750 031 A1**
(43) Date of publication of application: **27.05.2026**
(21) Application number: 25217200.2
(22) Date of filing: 20.11.2025
(51) Int. Cl.: H04L 67/10, H04L 67/2885, H04L 67/51, H04L 67/56, H04L 69/08, H04L 69/18, H04L 67/1021

(54) **DEVICE DISCOVERY THROUGH CENTRALIZED SYSTEM**

(30) Priority: 20.11.2024 US 202418953896
(71) Applicant: Schneider Electric IT Corporation, Foxboro, MA 02035 (US)
(72) Inventor: FISKE, Adam M., Andover 01810 (US)
(74) Representative: Plasseraud IP

(57) **Abstract**

A method for discovering devices on a system is presented, including receiving, at a server, instructions to operate an application; responsive to receiving the instructions to operate the application, discovering, with the application, one or more devices based on one or more criteria, the application discovering the one or more devices by accessing one or more gateways in communication with the server and, through the one or more gateways, identifying the one or more devices meeting the one or more criteria; and providing data corresponding to the one or more devices.

## Description

### BACKGROUND

At least one example in accordance with the present disclosure relates generally to systems and methods for managing an infrastructure of electronic devices.

### SUMMARY

According to at least one aspect of the present disclosure a method for discovering devices on a system is presented, comprising: receiving, at a server, instructions to operate an application; responsive to receiving the instructions to operate the application, discovering, with the application, one or more devices based on one or more criteria, the application discovering the one or more devices by accessing one or more gateways in communication with the server and, through the one or more gateways, identifying the one or more devices meeting the one or more criteria; and providing data corresponding to the one or more devices.

In some examples, the method further comprises communicatively connecting the one or more devices to the one or more gateways. In some examples, the method further comprises registering the one or more gateways with the application prior to receiving the instructions to operate the application. In some examples, the method further comprises determining the one or more criteria by providing a user interface containing one or more fields, wherein each field allows for the selection of at least one criterion of the one or more criteria, and receiving the one or more criteria responsive to user operation of the user interface. In some examples, accessing the application does not require providing any access credentials corresponding to any gateway or device to the application. In some examples, the method further comprises receiving, at one or more of the one or more gateways, a request to discover devices associated with at least one of the one or more gateways, the request not coming from the application, and rejecting the request. In some examples, the application contains a database of locations corresponding to the one or more devices.

According to at least one aspect of the present disclosure, a system for discovering devices is presented, comprising: one or more servers running an application, the one or more servers configured to be coupled to at least one network having one or more gateways that are coupled to one or more devices, and the application configured to: receive a connection request from a user device; responsive to receiving the connection request, connect to the user device; responsive to connecting to the user device, receive one or more criteria; and responsive to receiving the one or more criteria, discover any devices of the one or more devices that meet the one or more criteria.

In some examples, a first subset of the one or more devices is configured to communicate using a first protocol, and a second subset of the one or more devices is configured to communicate using a second protocol. In some examples, the one or more gateways are configured to understand both the first protocol and the second protocol and to translate information sent using one protocol into information using another protocol. In some examples, responsive to receiving the connection request, the application provides a user interface to the user device, the user interface including at least one field, the at least one field being displayed to a user wherein the at least one field corresponds to at least one of the one or more criteria, and receiving the one or more criteria responsive to user operation of the user interface. In some examples, the at least one field includes one or more subfields. In some examples, the at least one field permits the user to select at least one criterion of the one or more criteria. In some examples, the one or more criteria include at least one member of a set comprising locations of devices, gateways, and IP addresses of devices. In some examples, the application has permissions to access the one or more gateways and the one or more devices prior to receiving the request to connect.

According to at least one aspect of the present disclosure, a non-transitory computer-readable medium containing thereon one or more instructions for discovering devices is presented, the one or more instructions instructing at least one processor to: receive one or more criteria; responsive to receiving the one or more criteria, discover one or more devices based on one or more criteria by accessing one or more gateways and, through the one or more gateways, identify the one or more devices meeting the one or more criteria; and provide a list of the one or more devices meeting the one or more criteria.

In some examples, the one or more devices are communicatively coupled to at least one of the one or more gateways. In some examples, the one or more gateways are registered, with an application running on the at least one processor, prior to receiving the one or more criteria. In some examples, the instructions further instruct the at least one processor to provide a user interface having one or more fields which a user may interact with to set the one or more criteria, and to receive the one or more criteria responsive to user operation of the user interface. In some examples, the one or more criteria include at least one member of a set comprising locations of devices, gateways, and IP addresses of devices.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a system for managing devices on various networks according to an example;
FIG. 2 illustrates a user interface according to an example; and
FIG. 3 illustrates a process for managing devices on a network according to an example.

### DETAILED DESCRIPTION

For businesses with complex systems located in various physical locations and on possibly discrete networks, determining which devices are available on a given network and/or where the devices are located can be difficult.

In some examples as discussed herein, a business may have multiple physical locations (for example, multiple storefronts, warehouses, factories, and so forth). Each location may have its own network or be part of one or more networks shared with other locations. Each network may, in turn, have its own credentials required to access the network (for example, usernames and passwords, or any other type of access token). Each network may also have numerous devices connected to it (of which some devices may be able to connect to more than one network in some examples). For example, a given network may have one, five, ten, thirty, or any other number of devices connected to it, and those devices may be any type of electronic device, from familiar electronic devices such as computers or cellphones, to somewhat less common equipment, such as electrical power equipment, power generators, server communication equipment, or other specialized electrical equipment, and so forth. Furthermore, these various devices on the network may not use the same communication protocols, thus a given network may also include one or more gateways, where gateways may be devices (such as access points, network switches, and so forth) that facilitate communications between different protocols (for example, by translating a signal sent using one protocol to a different protocol).

In such a system, as described above, to access information on a given set of devices or to send instructions to a device, a user may be required to have credentials to access a given network (for example, to login to a given network), and must then discover the devices on that network before communicating with the devices. If the user further wishes to know the actual physical location of those devices, the user may be required to cross reference the devices (for example, identifiers ("IDs") of the devices) with a database containing the location of each device.

Aspects of the present disclosure relate to systems and methods for eliminating the onerous requirement of having multiple credentials to access different networks and therefore different devices and reducing the number of steps to determine the location of a device, as well as simplifying sending and receiving information to and from devices.

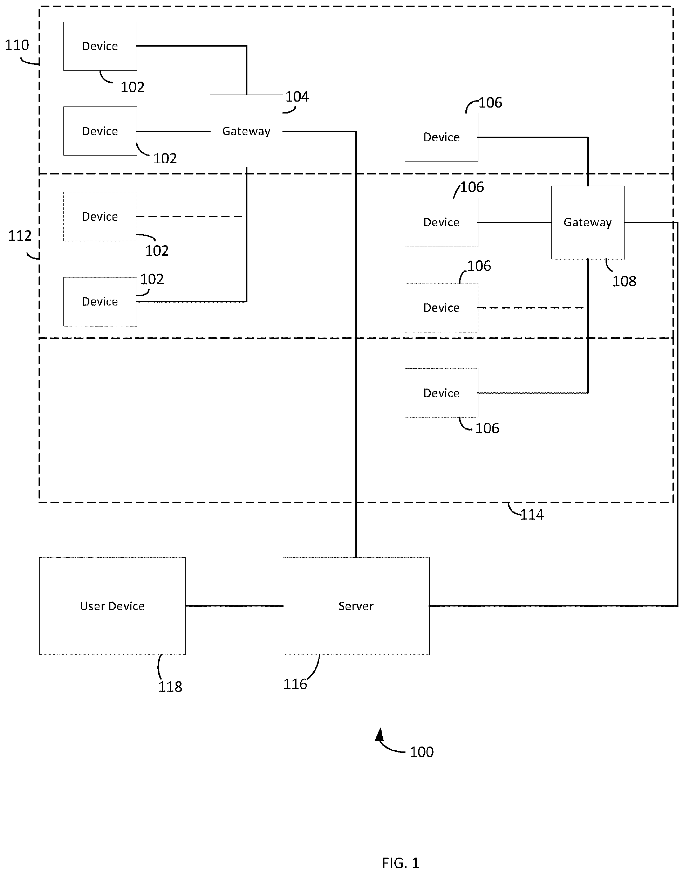

FIG. 1 illustrates a system 100 for managing devices across various networks according to an example. The system 100 includes one or more first devices 102, a first gateway 104, one or more second devices 106, a second gateway 108, a first location 110, a second location 112, a third location 114, and a server 116. A user device 118 is also shown.

The one or more first devices 102 may be coupled to the first gateway 104. The one or more first devices 102 and the first gateway 104 may belong to a first network.

The one or more second devices 106 are coupled to the second gateway 108. The one or more second devices 106 and the second gateway 108 may belong to a second network.

The first gateway 104, the second gateway 108, and the user device 118 are coupled to the server 116.

The gateways 104, 108 and devices 102, 106 may be located in different locations or the same location. Devices on a given network (including the gateways for that network) may be located at the same location or different locations. As illustrated, the first gateway 104 is located at the first location 110, the second gateway 108 is located at the second location 112, the one or more first devices 102 are located in the first and second locations 110, 112, and the one or more second devices 106 are located in the first, second, and third locations 110, 112, 114.

The devices of the one or more first devices 102 may use more than one communication protocol to communicate on the network. The first gateway 104 may receive communications from the devices of the one or more first devices 102 and convert communications from one protocol to another protocol to relay the communications to another device of the one or more first devices 102, to the server 116, or to another device (such as a network switch or access point).

The devices of the one or more second devices 106 may use more than one communication protocol to communicate on the network. The second gateway 108 may receive communications from the devices of the one or more second devices 106 and convert communications from one protocol to another protocol to relay the communications to another device of the one or more second devices 106, to the server 116, or to another device (such as a network switch or access point).

The server 116 may contain a database of the locations of devices, such as the locations of the devices of the one or more first device 102 and/or the devices of the one or more second devices 106. The server 116 may also store credentials to access each network individually or be preauthorized to access each network without requiring credentials. The server 116 need not be a single device, but may be a distributed computing network (such as a cloud based application), and may include one or more individual server devices that may be located in the same area or spread across numerous geographic areas.

The user device 118 may represent a device of an end user. The user device 118 may be a computer, cellphone, server, or any other processing device. The end user device 118 may receive and/or be programmed with credentials to access the server 116, or the end user may input credentials to access the server 116. The server 116 may then transmit data to the user device 118, such as data corresponding to a user interface or the like so that the end user may access some or all of the capabilities of the server 116. The user may then use the user device 118 to select from one or more locations, one or more gateways, and/or one or more networks and the server 116 may discover the devices corresponding to the selected criteria and determine their physical locations, and then provide that information to the user device 118, including, if desired, pairing the user device 118 with the discovered devices matching the selected criteria (for example, by allowing the user device 118 to send instructions or receive data directly to the discovered devices and/or doing the same via relay through the server 116).

As mentioned above, the server 116 may receive and/or be programmed with credentials to access the gateways 104, 106 without requiring input from the user. In some examples, when a user registers a gateway 104, 106, for example, with the server 116, the user may receive a registration code generated by the gateway 104, 106 or by the server 116. When the user later accesses the server 116 via their user device 118, the user may input the registration code and the server 116 may then automatically access and/or associate with every gateway associated with the registration code. Of course, more than one registration code may be used (e.g., one registration code per gateway), or the registration codes may be user-dependent (e.g., one registration code per organization or location).

In some examples, the user may provide the login credentials (e.g., usernames and passwords) for each gateway 104, 106 to the server 116 to be retained by the server 116 and used to access the gateways 104, 106 on demand.

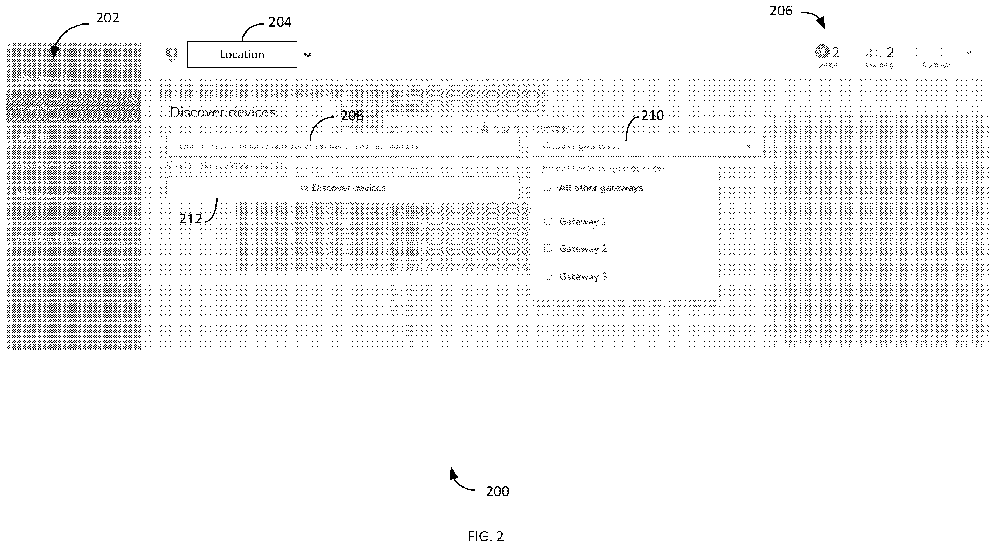

FIG. 2 illustrates a user interface 200 for accessing various gateways (such as the gateways 104, 106 of FIG. 1) via a server (such as the server 116 of FIG. 1).

The user interface 200 includes a dashboard 202, a location selection menu 204, a notification menu 206, a search bar 208, a gateway selection menu 210, and a discover devices button 212. These various options (dashboard 202, location selection menu 204, notification menu 206, search bar 208, gateway selection menu 210, and discover devices button 212) as well as any suboptions contained within them may be referred to as fields. Furthermore, the suboptions may also be referred to as subfields.

The user may use a user device (for example, user device 218 of FIG. 1) to log in or otherwise access an external system, for example one or more servers, cloud infrastructure, or similar, to discover devices. Upon accessing the external system, an application running on the external system may present the user interface 200 to the user (e.g., via the user's user device). The user may then use the interface to retrieve, access, send, or receive data.

The dashboard 202 of the user interface 200 includes various options, such as "Inventory," "Alarms," "Assessments," "Management," and/or "Administration," as well as other possible options, which the user may select between. In the illustrated example, the "Inventory" option is selected, which permits access to an interface for discovering devices connected to gateways.

The location selection menu 204 permits the user to select from among one or more locations for various purposes, for example, to limit the scope of gateways and/or devices to only those gateways and/or devices associated with the selected location. The location selection menu 204 may be, in some examples, a drop-down menu, though any other form of menu is also acceptable. The location selection menu 204 may permit the selection of one, none, or multiple locations simultaneously.

The notification menu 206 displays shorthand indicators of information that may be relevant to the user, for example, alarms, warnings, online contacts, and so forth. The notification menu 206 may therefore provide a convenient method by which the user can gain insight into other functionality provided by the application on the external system so that the user can make decisions based on said information. For example, if numerous "critical" alerts are indicated, the user may wish to navigate using the "Alarms" option on the Dashboard to view the current alarms and/or alerts.

The search bar 208 permits the user to search for a desired device, gateway, location, or to input a range of devices or locations, or to input a specific address or range of addresses for devices or locations. For example, as illustrated, the search bar 208 may be used to input a range of IP addresses so that the application can discover and/or display all devices and/or gateways and/or locations associated with the selected range of IP addresses.

The gateway selection menu 210 permits the user to select a subset of one or more gateways from among all available gateways, or to select all available gateways. In some examples, if a location has been selected using the location selection menu 204 the available gateways displayed in the gateway selection menu 210 may be limited to only those gateways associated with the selected location. Likewise, if a given gateway or set of gateways is selected, the locations available on the location selection menu 204 may be limited to only those locations associated with the selected gateways.

The discover devices button 212 may be pressed to instruct the application on the external system to display, report, generate, and/or reference a list of devices that correspond to any selected criteria. For example, if the chosen gateways in the gateway selection menu 210 are gateways "1" and "2", and the chosen location in the location selection menu 204 is "Boston, Massachusetts," then upon pressing the discover devices button 212 the application may display a list of those devices associated with gateways "1" and "2" which are located at the Boston, Massachusetts location.

The application may display any desired information about the discovered devices, including what the device is and/or does, where the device is located, any unique identifier information associated with the device, the communication protocols associated with the device, which gateways the device is associated with, an interface to send and/or receive commands, information, alerts, operational statuses, or other instructions or functions associated with the device, and so forth.

Note that the application on the external system may already know where each device is located, and may have already discovered all devices on every gateway. However, in some examples, the application may discover devices dynamically (for example, on demand when the discover devices button 212 is pressed). In other examples, the application may reference external databases to determine and present the relevant information.

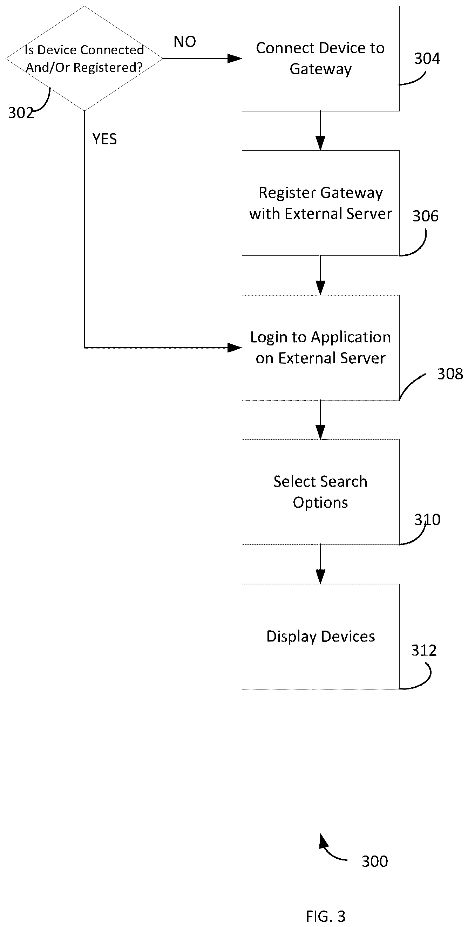

FIG. 3 illustrates a flow-chart of a process 300 for discovering devices on gateways, according to an example.

At act 302, the user and/or application and/or a third party determines whether a given device has been connected to a gateway and/or whether the gateway has been registered with the external system (for example, the server) hosting the application the user will use to interface with the devices on the gateway. As mentioned above, if the gateway is not known to the external system, or if the device is not connected to the gateway, it may be impossible to discover the device. If the device is connected and the gateway is registered (302 YES), the process 300 continues to act 308. If the device is not connected or the gateway is not registered (302 NO), the process 300 continues to act 304.

At act 304, an entity (such as the user, a robot, a third party, and so forth) connects the device or devices to one or more gateways. The user may make the connection using any wired, wireless, optical, or other method of connection so that the gateway may send and/or receive data from the device. The process 300 then continues to act 306.

At act 306, the entity registers the gateway with the external system and the application. The process 300 may then continue to act 308.

At act 308, the user logs into the application on the external system (for example, a cloud application running on a distributed infrastructure) using credentials assigned to that user to access the application. The user may not have any credentials for accessing the gateways, the devices, and/or the networks the gateways and/or devices may be connected to. That is, in some examples, the user may not be able to independently access the gateways to discover the devices directly from, for example, the user device. Likewise, the user may not be able to provide to the application any credentials related to the gateways, the devices, and/or the networks the gateways and/or devices may be connected to. Nevertheless, because the user has access to credentials to access the application, the user may still communicate with the gateways, networks, and/or devices through the application. Thus, by accessing the application the user does not need to have credentials to independently access the gateways, devices, and/or networks the gateways and/or devices may be connected to. The application may display a user interface to the user (for example, the user interface 200 of FIG. 2). The process 300 may then continue to act 310.

At act 310, the user, using the user interface, selects from one or more options available via the user interface. The options may include any of the options, fields, menus, and so forth, discussed with respect to the user interface 200 of FIG. 2. For example, the user may select a set of gateways, locations, IP addresses, device identifiers, and so forth. The user may then send an instruction for the application to display devices matching the selected criteria. The process 300 may then continue to act 312.

At act 312, the application displays to the user a representation (such as a list) of the devices matching the selected criteria, and may also display other information associated with the devices, such as the information described with respect to FIG. 2. To display the list (or other information), the application may discover the devices. To discover the devices, the application may access the gateways to determine which devices are associated with a given gateway. The application may do this in a number of ways. In some examples, the application may contain or have access to a database of credentials (e.g., usernames and passwords) for the gateways, and may automatically provide those credentials to the gateways to access the gateways. In some examples, the application may have automatic access (e.g., may not require any credentials) to access the gateways provided the gateways have been registered with the application and/or the server. For example, as described above, a given gateway may be connected to the application via a registration code generated by the gateway and provided to the application (or via a registration code generated by the application and provided to the gateway). In such examples involving registration, the fact of registration may indicate trustworthiness and therefore not require credentials for the transaction. In some examples, both registration and credentials may be used.

As used herein, the term "coupled" means at least "physical coupled or communicatively coupled."

Examples of the methods and systems discussed herein are not limited in application to the details of construction and the arrangement of components set forth in the description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

The user device 118 and/or the server 116 and/or the application, alone or in combination with one another, may be controllers. These controllers may execute various operations discussed above. Using data stored in associated memory and/or storage, the controllers may also execute one or more instructions stored on one or more non-transitory computer-readable media, which the controllers may include and/or be coupled to, that may result in manipulated data. In some examples, the controllers may include one or more processors or other types of controllers. In one example, the controllers may be or includes at least one processor. In another example, the controllers may perform at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A method (300) for discovering devices on a system (100), comprising:
receiving, at a server (116), instructions to operate an application;
responsive to receiving the instructions to operate the application, discovering, with the application, one or more devices (102,106) based on one or more criteria, the application discovering the one or more devices (102,106) by accessing one or more gateways (104,108) in communication with the server (116) and, through the one or more gateways (104,108), identifying the one or more devices (102,106) meeting the one or more criteria; and
providing data corresponding to the one or more devices (102,106).

2. The method of claim 1 further comprising communicatively connecting the one or more devices (102,106) to the one or more gateways (104,108).

3. The method of claim 1 or 2 further comprising registering the one or more gateways (104,108) with the application prior to receiving the instructions to operate the application.

4. The method of any of the claims 1 to 3 further comprising determining the one or more criteria by providing a user interface (200) containing one or more fields, wherein each field allows for the selection of at least one criterion of the one or more criteria, and receiving the one or more criteria responsive to user operation of the user interface (200).

5. The method of any of the claims 1 to 4 wherein accessing the application does not require providing any access credentials corresponding to any gateway or device to the application.

6. The method of any of the claims 1 to 5 further comprising receiving, at one or more of the one or more gateways (104,108), a request to discover devices associated with at least one of the one or more gateways (104,108), the request not coming from the application, and rejecting the request.

7. The method of any of the claims 1 to 6 wherein the application contains a database of locations corresponding to the one or more devices (102,106).

8. A system (100) for discovering devices, comprising:
one or more servers (116) running an application, the one or more servers (116) configured to be coupled to at least one network having one or more gateways (104,108) that are coupled to one or more devices (102,106), and the application configured to:
receive a connection request from a user device (118);
responsive to receiving the connection request, connect to the user device (118);
responsive to connecting to the user device (118), receive one or more criteria;
and
responsive to receiving the one or more criteria, discover any devices of the one or more devices (102,106) that meet the one or more criteria.

9. The system of claim 8 wherein a first subset of the one or more devices (102,106) is configured to communicate using a first protocol, and a second subset of the one or more devices (102,106) is configured to communicate using a second protocol, and wherein the one or more gateways (104,108) are configured to understand both the first protocol and the second protocol and to translate information sent using one protocol into information using another protocol.

10. The system of claim 8 or 9 wherein, responsive to receiving the connection request, the application provides a user interface (200) to the user device (118), the user interface (200) including at least one field, the at least one field being displayed to a user wherein the at least one field corresponds to at least one of the one or more criteria, and receiving the one or more criteria responsive to user operation of the user interface (200).

11. The system of claim 10 wherein the at least one field permits the user to select at least one criterion of the one or more criteria.

12. The system of any of the claims 8 to 11 wherein the application has permissions to access the one or more gateways (104,108) and the one or more devices (102,106) prior to receiving the request to connect.

13. A non-transitory computer-readable medium containing thereon one or more instructions for discovering devices, the one or more instructions instructing at least one processor to:
receive one or more criteria;
responsive to receiving the one or more criteria, discover one or more devices (102,106) based on one or more criteria by accessing one or more gateways (104,108) and, through the one or more gateways (104,108), identify the one or more devices (102,106) meeting the one or more criteria; and
provide a list of the one or more devices (102,106) meeting the one or more criteria.

14. The non-transitory computer-readable media of claim 13 wherein, responsive to receiving the one or more criteria, the instructions further instruct the at least one processor to cross-reference each discovered device matching the one or mor criteria with a database of locations indicating a location of the one or more devices (102,106), and, when providing the list of one or more devices (102,106), including a respective location of each of the one or more devices (102,106) on the list.

15. The non-transitory computer-readable media of claim 13 wherein, responsive to receiving, at a gateway of the one or more gateways (104,108), a request to discover devices associated with that gateway, the gateway rejects the request unless the request originated with the at least one processor and the at least one processor has permissions to access the gateway.
